# EUROPEAN PATENT APPLICATION

(11) **EP 3 874 936 A1**
(43) Date of publication of application: **08.09.2021**
(21) Application number: 20160549.0
(22) Date of filing: 03.03.2020
(51) Int. Cl.: A01G 9/14, A01G 9/26, A01G 9/24, A01G 7/00, G05D 1/02, A01G 7/06

(54) **PLANT GROWTH MONITORING SYSTEM**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

A mechanism for generating plant information about a plant (150). Two sets of one or more images of the plant (150) are captured, each set being captured from two opposite sides of the plant (150). The two sets of one or more images are processed together to generate information about the plant (150).

## Description

### FIELD OF THE INVENTION

The present invention relates to the field of plant monitoring, and in particular, to a plant growth monitoring system.

### BACKGROUND OF THE INVENTION

There is a growing interest in the concept of (commercial) greenhouses, which can enable growing conditions, such as temperature, humidity, air CO₂ concentration, nutrient supply, soil conditions and so on, to be controlled and/or designed. This can be exploited to grow plants out of season or in unusual climates. Commercial greenhouses have the potential to reduce the carbon footprint for providing a population with a diverse food supply throughout the year, as different types of food (e.g. food that could not be grown outside or in the season) can be grown closer to the population, thereby reducing a number of miles that food must travel to support the population.

In greenhouses, it is important to obtain information about a plant, e.g. to measure plants attributes. This can help in knowing when to harvest a plant and/or knowing whether growing conditions need to be adjusted/modified. Moreover, highly reliable plant information can be used to facilitate the use of prediction models (e.g. for harvesting), which could be used to safely commit to vendors and/or suppliers based on accurate predictions of plant growth.

There is a growing trend in attempts to automate the information gathering process to make it as scalable and consistent as possible. It has previously been proposed for an automated system to obtain an image of a plant, and process the image to derive some information about the plant, such as identifying the number of tomatoes on a tomato plant.

There is an ongoing desire to improve the mechanisms by which information about a plant is obtained, in order to maximize the types of information about a plant that are available.

### SUMMARY OF THE INVENTION

The invention is defined by the claims.

According to examples in accordance with an aspect of the invention, there is provided a plant growth monitoring system. The plant growth monitoring system comprises: an image capture system and an image processing system. The image capture system is adapted to: capture a first set of one or more images of a plant within a range of angles not exceeding 150°, the first set of one or more images being of a first side of the plant; and capture a second set of one or more images of the plant within a range of angles not exceeding 150°, the second set of one or more images being of a second side of the plant, wherein the second side of the plant is opposite to the first side of the plant. The image processing system is configured to process the first and second set of images to generate plant information responsive to the growth of the plant.

The present invention therefore proposes to take at least two pictures of a plant, one from either side of the plant. These two pictures or images are then processed together in order to generate plant information responsive to the growth of the plant. The plant information comprises any information that will change as the plant grows or matures.

Suitable examples of plant information include a 3D model of the plant, a size of the plant, a proximity to harvest of the plant, a number of fruit of the plant, a number of leaves of the plant, a (leaf/foliage) density of the plant, a trunk/stem size of the plant, a number of flowers of the plant, a color of the plant, and so on.

The invention relies upon the recognition that plants in greenhouses are typically placed in parallel rows, which means that images can be obtained from either side of the plant. In particular, the inventors have recognized that, by obtaining plant information from images captures from two sides of the plant e.g. from either side of a row of plants, the spacing between plants (within a row) can be minimized or reduced.

The present inventors have therefore proposed and developed a system for obtaining plant information from images obtained from two sides of the plant.

In some embodiments, the plant information is obtained by processing only the first and second set of images. For the avoidance of doubt, the step of processing only the first and second set of images means that other images of the plant (captured by the image capture system) are excluded from this step.

In some embodiments, the first set of one or more images are captured over a range of angles not exceeding 140°, preferably not exceeding, 90°, more preferably not exceeding 45°, and even more preferably not exceeding 30°; and the second set of one or more images are captured over a range of angles not exceeding 140°, preferably not exceeding, 90°, more preferably not exceeding 45°, and even more preferably not exceeding 30°.

Reducing the range of angles over which each set of one or more images is captured means that a spacing between plants within a same row can be yet further reduced, and allows for greater overlap between two plants.

The image processing system may be configured to: identify one or more target objects in the first set of one or more images; identify one or more target objects in the second set of one or more images; and process the target objects to generate the plant information responsive to the growth of the plant.

In some embodiments, each target object identified in the second set of one or more images corresponds to a target object identified in the first set of images. Thus, the step of identifying one or more target objects in the first set of images and the step of identifying one or more target objects in the second set of images may be combined into a single step of identifying one or more target objects present in both the first and second set of one or more images.

The image processing system may be configured to: identify one or more target objects present in both the first and second set of one or more images; determine a size of each of the one or more target objects present in both the first and second set of one or more images; and generate plant information responsive to the determined size of each of the one or more target objects present in both the first and second set of one or more images.

In some examples, each target object is an edible part of the plant, such as an edible piece of fruit or an edible flower. Other suitable target objects will be apparent to the skilled person, such as a leaf, stem, branch, bud or flower of the plant. It is not essential that the target object be edible, although this is preferred to enable a progression of the plant towards harvest to be determined.

Optionally, the plant information comprises a 3D image of the plant and the image processing system is adapted to construct the 3D image of the plant from the first and second sets of one or more images. A 3D image of a plant can be of significant help to a user monitoring a greenhouse housing the plant, as it enables detailed remote monitoring and observation of the plant, e.g. to observe a structure and/or monitor growth of the plant.

The image capture system may be unable to capture images of third and fourth sides of the plant, the third and fourth sides of the plant being perpendicular to the first and second sides.

In some embodiments, the first set of one or more images are captured within a first, single angle with respect to the plant; and the second set of one or more images are captured within a second, single angle with respect to the plant, the second angle being offset from the first angle by 170° to 190°.

The first and second sets of one or more images may each consist of a single image.

The image capture system preferably comprises: a first camera for capturing the first set of one or more images; a second camera for capturing the second set of one or more images; and a carriage system adapted to move the first camera along a first side of a row of plants; and to move the second camera along a second, opposite side of a row of the plants.

In some examples, the carriage system is configured to move the first and second cameras synchronously and the first and second cameras are configured to capture the first and second sets of one or more images simultaneously.

In some examples, the plant growth monitoring system further comprises a location system configured to monitor the location of the first and second cameras to enable identification of first and second sets of images based on the monitored location of the cameras.

The carriage system may be adapted to: move the first camera along a first axis, wherein the angle of the first camera with respect to the first axis is fixed; and move the second camera along a second axis, parallel to the first axis, wherein the angle of the second camera with respect to the second axis is fixed.

Embodiments of the invention may also provide a computer-implemented method of monitoring the growth of a plant. The computer-implemented method comprises: obtaining a first set of one or more images of a plant within a range of angles not exceeding 150°, the first set of one or more images being of a first side of the plant; obtaining a second set of one or more images of the plant within a range of angles not exceeding 150°, the second set of one or more images being of a second side of the plant, wherein the second side of the plant is opposite to the first side of the plant, and processing the first and second set of images to generate plant information responsive to the growth of the plant.

Embodiments may provide a computer program comprising computer program code means which is adapted, when said program is run on a computer, to implement the any herein described method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a plant growth monitoring system according to an embodiment;
Figure 2 is a flowchart illustrating a method according to an embodiment;
Figure 3 is a top down view illustrating imaging directions of cameras imaging a plant according to an embodiment; and
Figure 4 is a flowchart illustrating a method according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for generating plant information about a plant. Two sets of one or more images of the plant are captured, each set being captured from two opposite sides of the plant. The two sets of one or more images are processed together and alone to generate plant information about the plant.

Embodiments of the invention are based on the realization that valuable plant information can be obtained from images taken from either side of a plant, and that two sides of a plant are available in a standard greenhouse from which images can be obtained. This enables plants in a greenhouse to be grown in close proximity to one another, without losing the ability to obtain valuable growth information about the plants.

Embodiments of the invention may be employed in any suitable plant growing environment, such as a greenhouse.

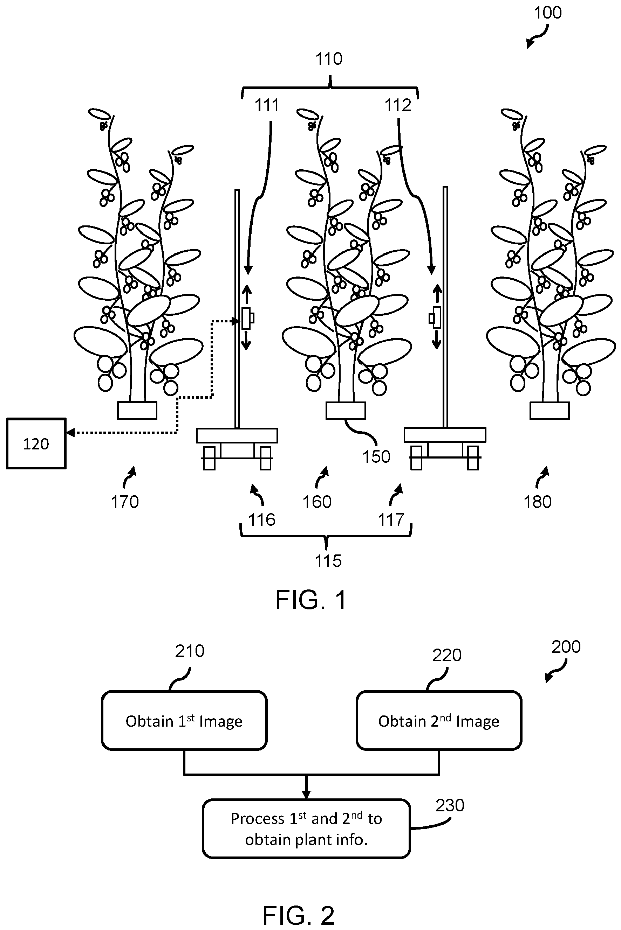

Figure 1 illustrates a plant growth monitoring system 100 according to an embodiment of the invention.

The growth plant monitoring system 100 comprises an image capture system 110 and an image processing system 120. The illustrated growth plant monitoring system 100 is adapted to monitor the growth of a plant 150.

The image capture system 110 is adapted to capture a first set of one or more images (of the plant 150) and a second set of one or more images (of the plant 150). The first set of images are of a first side of the plant, and the second set of images are of a second side of the plant (opposite to the first).

The skilled person will appreciate that the image capture system 110 may be unable to capture images of a third and fourth side of the plant 150. The third and fourth side are perpendicular to the first and second side, but opposite one another. This enables other plants to be positioned directly next to the plant 150, e.g. to form a row of plants.

In the illustrated example, the image capture system comprises a first camera 111 for capturing the first set of one or more images, and a second, separate camera 112 for capturing the second set of one or more images. The first and second cameras face one another, so that they take images of opposite sides of the plant 150.

However, the skilled person would appreciate that a single camera may be maneuvered (e.g. controlled) to capture both the first and second set of one or more images, or that either or both of the first and second cameras 111, 112 may be replaced by a plurality of cameras.

The range of angles over which the first and/or second set of one or more images is captured does not exceed 150°, e.g. not exceeding 140° and more preferably does not exceed 90°. Preferably, the range of angles does not exceed 45°, and even more preferably does not exceed 30°. Even more preferably, the range of angles does not exceed 5°. It will be understood that the range of angles lies within a horizontal plane, and is defined with respect to the plant 150.

Preferably, each set of one or more images comprises only a single image of the plant. In other example, each set of one or more images comprises a plurality of images that are each captured from a same relative angle around the plant, but at different heights. In yet other examples, each set of one or more images may comprise two sub-sets of one or more images, each image in a sub-set being captured from a same relative angle around the plant, with different sub-sets being captured at different relative angles. The precise nature (e.g. content, number and/or angle of capture) of the captured images may depend upon the desired plant information to be obtained about the plant 150.

In some embodiments, in which images are captured from a same relative angle but at different heights, these images may be stitched together to form a single image for a set of one or more images. It is acknowledged that, for more accurate formation of a stitched image, such images are preferably captured in sequence within a short period of time. This embodiment improves the amount of image information that is used to generate the plant information.

Each image may comprise image data (being data responsive to reflected electromagnetic waves, e.g. light) and metadata (which may identify a location, height, angle and/or time at which an image is taken). This information can be used to derive plant information and/or identify images forming the first and second set of one or more images.

In particular, the image data of both sets of one or more images may be used to generate the plant information. Metadata may be used to identify which images form the first and second set of one or more images, as will be later explained.

The first and second set of images may be captured by moving the image capture system with respect to a row of plants. In particular, the first camera may be moved alongside a first side of a row of plants (including the plant 150) and the second camera may be moved alongside a second side of the row of plants.

In the illustrated growth plant monitoring system 100, this movement is carried out by a carriage system 115, which may be an element of an embodiment of the invention. The carriage system 115 is adapted to move the first camera along a first side of a row of plants; and to move the second camera along a second, opposite side of a row of the plants.

The first and second cameras may be mounted on their respective carriages such that they are able to move vertically upwards and downwards. Thus, each camera may be mounted on its carriage by a vertical movement system that controls a vertical position of the camera with respect to (a base of) the carriage. In greenhouses, some plants may be vertically moved throughout the course of a day (or other period of time), e.g. from a top to a bottom of the greenhouse. By enabling the first and second cameras to also be vertically moveable, the cameras can track such a movement of the plant.

As illustrated, if the plant monitored by the plant growth monitoring system is located within a first row of plants 160 that is disposed between a second 170 and third 180 row of plants, the carriage system 115 moves the first camera 111 between the first row 160 and second row of plants 170 and moves the second camera 112 between the first row 160 and third row 180 of plants.

In this illustrated example, the first camera 111 is mounted on a first carriage 116 which moves along a first side of the row of plants (i.e. between two rows of plants). The second camera 112 is mounted on a second carriage 117 that moves along a second, opposite side of the row of plants.

A carriage, e.g. the first carriage or the second carriage, may be adapted to move along one or more rails. Thus, a carriage may comprise a wheel arrangement for engaging with one or more rails (not shown).

The process of capturing the first and second set of one or more images may be performed as the first and second carriages move either side of the row 160 of plants. In such embodiments, the image capture system (in particular, the first and second cameras) may be configured to repeatedly/iteratively capture images of plants in the row. It will therefore be appreciated that it may be necessary to couple images (captured from either side of the row) together, to ensure that image captured by the first and second cameras correspond to a particular plant 150.

In other words, the first and second set of images (for a single plant) may need to be extracted from a greater corpus of images captured by the first and second camera (which may include images of multiple plants in the row). This can be performed by identifying which images correspond to a particular plant.

Put yet another way, the first set of one or more images may be extracted from a (larger) first group of images captured by the first camera. The second set of one or more images may be extracted from a (larger) second group of images captured by the second camera. The first and second sets of image(s) relate to a same plant.

In an embodiment of the invention, a first and second group of images, captured by the first and second cameras respectively, are processed to identify which images correspond to a same plant 150, and can thereby form the first and second sets of one or more images of that plant.

In a first example, the carriage system 115 is configured to move the first and second cameras simultaneously and/or synchronously, whilst the first and second cameras are also configured to capture images synchronously (e.g. to a movement). In this embodiment, it can be assumed that images captured at substantively the same time correspond to a same plant. This means that images can be coupled together based on their timestamp(s), to enable identification of a first and second set of images (for a single plant). By way of example, an image from a first camera may be coupled to an image from a second camera that was taken most closely in time.

Thus, in the first example, each image may comprise at least image data (being responsive to reflections of electromagnetic waves) of a plant and metadata identifying a time at which the image data is obtained.

In a second example, the carriage system 115 and/or image capture system is configured to tag a location, e.g. distance along a row and optionally height (e.g. if a vertical position of the plant can be changed) and/or angle, of the first and second cameras as they take a picture. This means that images can be coupled together based on their location (e.g. position along row, height and/or angle). This embodiment does not require synchronous movement of the carriage(s) and/or synchronous capture of images. By way of example, an image from a first camera may be coupled to an image from a second camera that was taken at a same relative position (and optionally height) along a row of plants (derived from location data).

For the second example, it can be assumed that the position of the plant is unchanged between pictures taken by the first and second cameras.

Thus, in the second example, each image may comprise at least image data (being responsive to reflections of electromagnetic waves) of a plant and metadata identifying a location from which the image data is obtained (location data).

Another example includes placing identifying markers (e.g. unique plant labels or numbers) alongside each plant (e.g. on either side of a same plant), and processing captured images to identify images containing the same unique plant labels.

Other methods of identifying images taken from either side of a same plant will be apparent to the skilled person. The skilled person will appreciate that metadata of an image may, in particular, be used to identify images taken from either side of a same plant.

In one example, only a single camera is used to take the first and second sets of one or more images. The carriage system 115 may be adapted to move the single camera either side of the plant 150. Images of a same plant, taken by a single camera from either side of the plant, may be grouped together. Determination of whether images are of a same plant may use any previously mentioned method, e.g. using location data or other metadata of images.

These embodiments are particularly advantageous in an automated greenhouse, as the process of taking pictures can be executed in parallel with other activities involving moving carriages on the rails (e.g. watering, harvesting, fertilizing, applying insecticide, cleaning etc.).

The skilled person will appreciate that the carriage system may mount further components that can be used alongside the imaging capture system, e.g. a watering system, a harvesting system, a fertilizing system, an insecticide system, a cleaning system and so on.

The image processing system 120 is adapted to process the first and second sets of one or more images of the plant. The image processing system 120 may receive or obtain the first and second sets of image(s), from the image capture system 110, using any suitable wired or wireless communication medium/channel (of which only one possible channel is illustrated with dashed lines).

The image processing system 120 is adapted to process the first and second sets of images to generate plant information responsive to the growth of the plant. Plant information can therefore be derived from the first and second sets of images alone. In specific embodiments, the image processing system 120 is adapted to process only the first and second sets of images to generate plant information responsive to the growth of the plant.

Figure 2 is a flowchart illustrating a method 200, according to an embodiment of the invention, which may be carried out by the image processing system.

The method 200 comprises a step 210 of obtaining a first set of one or more images of a plant within a range of angles not exceeding 150° (e.g. ≤ 140°, e.g. ≤90°), the first set of one or more images being of a first side of the plant.

The method 200 also comprises a step 220 of obtaining a second set of one or more images of the plant within a range of angles not exceeding 150° (e.g. ≤ 140°, e.g. ≤90°), the second set of one or more images being of a second side of the plant, wherein the second side of the plant is opposite to the first side of the plant.

Steps 210 and 220 may be performed consecutively or concurrently.

The method 200 further comprises a step 230 of processing the first and second set of images to generate plant information responsive to the growth of the plant. It specific embodiments, step 230 excludes the use of other images that may be captured by the image capture system to generate the plant information.

Referring back to Figure 1, when the method 200 is carried out by the image processing system, the image processing system generates plant information using the first and second sets of image(s) captured by the image capture system 110.

The precise content of the plant information, and therefore the output of the method 200 and the process performed by the image processing system, can vary depending upon the implementation details.

In some embodiments, the plant information may comprise a 3D model of the plant. In this embodiment, the image processing system is adapted to process the first and second set of one or more images to construct a 3D model of the plant.

Preferably, where the plant information comprises a 3D model of the plant, each of the first and second set of one or more images comprises at least two images (horizontally) offset from one another.

In particular, a 3D image or model could be constructed by combining a number of images take from one side of the plant with a number of images taken from the other side. By taking an image of a plant and then moving the camera by a small distance (e.g. a few cm) and again taking an image, a stereo pair is obtained from which 3D depth information can be derived. By combining stereo pairs taken from the two opposite sides of the same plant, an improved 3D image of that plant can be obtained.

In another example, a color of the plant from a first side may be compared to a color from the plant on a second side, to ensure even growth and maturity of the plant. This information may be used to determine or identify whether the plant is growing evenly.

In other examples, the plant information comprises information responsive to information about target objects of the plant. A target object may, for example, be any element or object suitable for monitoring the growth of the plant, such as a leaf, flower, fruit etc. The plant information may comprise, for example, an estimated time until plant maturity or recommended harvest of the plant 150. Other examples will be understood from later described scenarios.

Methods of the invention may comprise identifying one or more target objects in the first and second set of one or more images, and this information to generate the plant information. In particular, information about the identified target objects (e.g. number of target objects, size of target objects, color of target objects and so on) may be used to generate useful plant information.

A target object can be identified by processing the first and second sets of one more images using an object-recognition process. Object-recognition processes are well established in the prior art, and may, for example, comprise using a neural network or other machine-learning algorithm to process the first and second sets of one or more images to identify any target objects within the images.

In a first scenario, where the target object is a fruit of a fruit bearing plant, a number of fruit identified in the first and second image could be used to estimate a total number of fruit borne by the plant. This information can be used to control when harvesting of the plant occurs.

The advantage of the present invention for such a scenario is to improve the accuracy of the estimated total number of fruit. In particular, if a single image of the plant (from a single side) were taken, some fruits may be missed due to leaf occlusion. Using images obtained from both sides of the plant enables a more accurate calculation/estimation of the number of fruit borne by the plant, which enables the plant information to be more accurate. In a second scenario, in which the target object is again a fruit of a fruit bearing plant, a size/location of a same piece of fruit identified in the first and second set of one or more images can be used to predict a size/location of that piece of fruit. This information would be useful to define and/or control whether to harvest the plant of its fruit.

For example, if a same piece of fruit imaged by one of the first set of one or more images can be also identified in one of the second set of one or more images, it is possible to determine the location and absolute size of that tomato. By way of explanation, if the same piece of fruit appears large in the first set of one or more images and small in the second set of one or more images, then that piece of fruit must be closer to the first camera. If the distance between the two cameras and their angular field of view is known, it is possible to quantify the size of the piece of fruit.

In this second scenario, a same fruit is identified in both the first set of one or more images and the second set of one or more images. This concept can be expanded to other elements of the plant (e.g. leaf, stem, trunk, flower etc.) and be used to derive other plant information. A more detailed description of this concept will be later described.

In a third scenario, the target object is a leaf of the plant. Identifying the same leaves in the first and second image may enable a size and/or maturity of the plant to be estimated. For example, a distance between a first camera and a leaf on the first side of the plant can be estimated based on an imaged size of the leaf (in the first set of images) and a known (e.g. from periodic testing of leaf size), estimated (e.g. based on age of the plant) or (global) average size of the leaf. A similar approach may be used to estimate a distance between a second camera and a leaf on the second side. These two pieces of distance information can be used to estimate a size/width of the plant, e.g. if a distance between the two cameras is known.

To avoid or reduce confusion between other leaves, in this third scenario, first and second images depicting a highest leaf may be identified and processed to generate plant information.

From the foregoing examples, it will therefore be apparent to the skilled person that various mechanisms for generating plant information from a first and second set of one or more images, taken from either side of a plant, are envisaged. Further embodiments will be later described.

The plant growth monitoring system may comprise a user interface (not shown) adapted to display the plant information to a user. This provides a user with a mechanism by which the plant information can be understood and acted on by the user. Any suitable user interface, e.g. screen or display, may be used.

In some embodiments, the plant growth monitoring system may form part of a larger automated plant growing system. The automated plant growing system may use the plant information to adjust one or more growing conditions for a plant or perform one or more other actions with respect to the plant (e.g. harvesting the plant) based on the plant information.

By way of example, the dimensions of a plant depend upon CO₂ concentration (in air), nutrition and light. Hence, if plant information provides information on a plant size, a target dimension could be reached by adjusting nutrition and light, and/or the Co2 concentration appropriately.

As another example, the ripeness of a fruit is dependent upon temperature. By monitoring the ripeness of fruit (e.g. by assessing the color and/or size of a fruit), harvesting time can be delayed or speeded up by decreasing/increasing the temperature surrounding the plant.

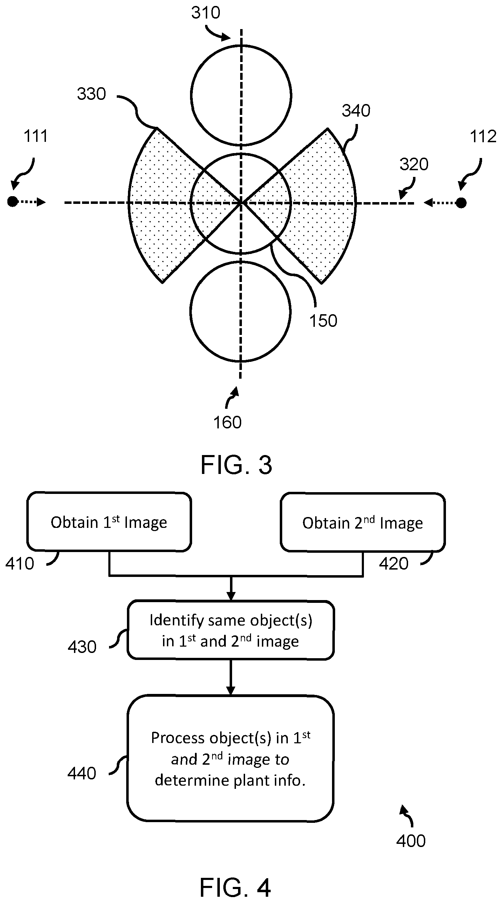

Figure 3 is used to more fully explain the distinction between the first and second set of one or more images. Figure 3 illustrates a top-down view of a row of plants 160, including a plant 150 (for which growth is being monitored).

Figure 3 illustrates exemplary positions of the first camera 111 and the second camera 112, according to one example of the invention. Figure 3 also illustrates the imaging direction (i.e. the direction in which a camera faces) of the first and second cameras. It is plausible that the imaging direction of the first and second cameras may be controlled.

Consider a first hypothetical axis 310 arranged in the direction of the row of plants 160, and passing through the center of the plant 150, and a second hypothetical axis 320, passing through the plant 150, and perpendicular to the first hypothetical axis. This second hypothetical axis may, as illustrated, pass through the center of the plant 150 (but this is not essential). Both the first and second hypothetical axes are parallel to a ground/horizontal plane.

Within the plane containing these axis (i.e. a horizontal plane), the first set of one or more images are captured within a first range of angles 330 not exceeding 90° (as illustrated), although other (maximum) magnitudes for this range are envisaged (e.g. 150°, 140°, 60° or 30° or 15° or 5°). The second set of one or more images are captured within a second range of angles 340, also not exceeding 90° (as illustrated), although other (maximum) magnitudes for this range are envisaged (e.g. 150°, 140°, 60° or 30° or 15° or 5°).

The first and second range of angles may be positioned so that they are bisected by (an instance of) the second hypothetical axis, which runs perpendicular to the direction of the row of plants 160. The second hypothetical axis need not be in the same position for both ranges of angles.

The first range of angles may thereby define the "first side" of the plant 150, and the second range of angles may define the "second side" of the plant 150.

Conceptually, if a line is drawn between the position of the first camera and the center of the plant 150: when capturing the first set of one or more images, this line will lie within the first range of angles. Similarly, if a line is instead drawn between the position of the second camera and the center of the plant 150: when capturing the second set of one or more images, this line will lie within the second range of angles

In other words, the imaging direction(s) in which the first set of one or more images are obtained lie(s) within the first range of angles. Similarly, the imaging direction(s) in which the second set of one or more images are obtained lie(s) within the second range of angles.

The imaging directions of the first and second cameras are configured so that a magnitude of an angle between the two is between 90° and 180°. Preferably, the imaging directions of the first and second camera are configured so that an angle between the two is between 140° and 180°.

Preferably, the imaging directions of the first and second camera are configured so that an angle between the two is between 175° and 180°, e.g. 180°, i.e. the cameras effectively (directly) face one another when taking the first and second sets of one or more images respectively.

Conceptually, there may also be a third and fourth range of angles. The third range of angles corresponds to a first (unused) range of angles between the first and second ranges, and the fourth range of angles corresponds to the second (remaining, unused) range of angles between the first and second ranges (i.e. completing the full circle of angles together with the first, second and third range of angles).

The first and second cameras may be configured to be unable to take images of the plant within the third and fourth range of angles.

The term "first camera" is used to refer to a camera capturing the first set of one or more images, and the term "second camera" is used to refer to a camera that captures the second set of one or more images. As previously discussed, this may be the same camera, two separate cameras or two separate sets of cameras.

The magnitude of the first and/or second range of angles may be selected based upon estimated or known characteristics of the plant (e.g. the plant diameter) and/or a planting arrangement (e.g. distance between plants in a row). In particular, the first and/or second range of angles may be selected so that either or both of the range of angles does not overlap a neighboring plant. The

Figure 4 illustrates a method 400 according to another embodiment of the invention. The method 400 may be carried out by the image processing system.

The method 400 comprises a step 410 of obtaining a first set of one or more images of a plant within a range of angles not exceeding 150° (e.g. ≤ 140°, e.g. ≤90°), the first set of one or more images being of a first side of the plant.

The method 400 also comprises a step 420 of obtaining a second set of one or more images of the plant within a range of angles not exceeding 150° (e.g. ≤ 140°, e.g. ≤90°), the second set of one or more images being of a second side of the plant, wherein the second side of the plant is opposite to the first side of the plant.

Steps 410 and 420 may be performed consecutively or concurrently. Steps 410 and 420 may be effectively equivalent to steps 210 and 220.

The method 400 further comprises a step 430 of identifying one or more target objects present in both the first and second set of one or more images. In other words, step 430 comprises recognizes a same object (or objects) present in both sets of one or more images.

Methods for performing step 430 will be apparent to the skilled person. For example, if a spatial relationship between two cameras capturing a same scene is known, then locations within a first image (from a first camera) can be respectively spatially mapped to locations within a second image (from a second camera). For example, if the first camera directly faces a second camera, then an object in an upper right corner of a first image (captured by the first camera) will be present in an upper left corner of the second image.

Thus, step 430 may comprise determining a spatial relationship between the first and second camera, and using the determined spatial relationship to identify a same object present in both the first set of one or more images and the second set of one or more images.

Step 430 may also exploit any known object-recognition process, e.g. that uses a neural network or other machine-learning algorithm, to identify the presence and/or position of an object within the first/second set of one or more images.

In another example, step 430 may comprise determining a relationship between imaging direction (or imaging directions) of the first camera and an imaging direction (or imaging directions) of the second camera, and using the determined relationship to identify a same object present in both the first set of one or more images and the second set of one or more images.

Information about the same object, from the first and second set of one or more images, can be used to generate plant information in a step 440.

Step 440 may, for example, comprise determining a size of each of one or more target objects present in both the first and second set of one or more images; and generating plant information responsive to the determined size of each of the one or more target objects present in both the first and second set of one or more images.

The generated plant information may comprise, for example, an estimated size of the target object(s). As previously explained, if the distance between the two cameras and their angular field of view is known, it is possible to quantify the size of the target object.

In another example, the generated plant information may comprise a maturity or health of the overall plant (or target object itself). By estimating the size of the target object, e.g. the fruit or leaf, a progression of the plant towards harvest may be monitored.

In another example, the generated plant information may comprise a health or maturity of a target object, such as a ripeness of a fruit. By way of example, the color of a piece of fruit (an example of a target object) on two sides may be identified (from the first and second set of images containing that piece of fruit). This can be used to detect a ripeness or maturity of the fruit, whether the fruit is maturing or ripening at an even rate, or to identify possible health problems with the piece of fruit (e.g. rotting or uneven coloration).

The health and/or maturity of a target object (or the plant itself) could be derived from one or more characteristics of the target object derived from the first and second set of one or more images. For example, the health and/or maturity of a piece of fruit (or any other target object or the plant itself) may be derived from one or more pf: a size of the piece of fruit, a color of the piece of fruit, a shape of the piece of fruit and so on.

Other examples for processing image information, obtained from two, opposite sides of a plant, about a same target object to derive plant information will be apparent to the skilled person.

Each target object may, for example, comprise an edible part of the plant, such as an edible piece of fruit or an edible flower. Other examples will be apparent to the skilled person, e.g. a leaf, stem or trunk of the plant.

The skilled person would be readily capable of developing a processing system, in particular an image processing system, for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In the context of the present invention, a processing system may be a single device or a collection of (distributed) devices that carry out or more embodiments of the herein described invention. By way of example only, a processing system may be a personal computer (PC), a server (i.e. a remote computer) or a collection of PCs and/or servers connected via a network such as a local area network (LAN), the Internet or via any other medium that enables the collection to co-operate and execute at least one embodiment of the herein disclosed invention. In particular, the processing system may be a non-embedded system.

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A plant growth monitoring system, comprising:
an image capture system adapted to:
capture a first set of one or more images of a plant within a range of angles not exceeding 150°, the first set of one or more images being of a first side of the plant;
capture a second set of one or more images of the plant within a range of angles not exceeding 150°, the second set of one or more images being of a second side of the plant, wherein the second side of the plant is opposite to the first side of the plant, and
an image processing system configured to process the first and second set of images to generate plant information responsive to the growth of the plant.

2. The plant growth monitoring system of claim 1, wherein the image processing system is configured to process only the first and second set of images to generate the plant information.

3. The plant growth monitoring system of claim 1 or claim 2, wherein:
the first set of one or more images are captured over a range of angles not exceeding 90°, preferably not exceeding 45°, and more preferably not exceeding 30°; and
the second set of one or more images are captured over a range of angles not exceeding 90°, preferably not exceeding 45°, and more preferably not exceeding 30°.

4. The plant growth monitoring system of any of claims 1 to 3, wherein the image processing system is configured to:
identify one or more target objects in the first set of one or more images;
identify one or more target objects in the second set of one or more images; and
process the target objects to generate the plant information responsive to the growth of the plant.

5. The plant growth monitoring system of claim 4, wherein each target object identified in the second set of one or more images corresponds to a target object identified in the first set of images.

6. The plant growth monitoring system of any of claims 1 to 5, wherein the image processing system is configured to:
identify one or more target objects present in both the first and second set of one or more images;
determine a size of each of the one or more target objects present in both the first and second set of one or more images; and
generate plant information responsive to the determined size of each of the one or more target objects present in both the first and second set of one or more images.

7. The plant growth monitoring system of any of claims 4 to 6, wherein each target object is an edible part of the plant, such as an edible piece of fruit or an edible flower.

8. The plant growth monitoring system of any of claims 1 to 7, wherein the plant information comprises a 3D image of the plant and the image processing system is adapted to construct the 3D image of the plant from the first and second sets of one or more images.

9. The plant growth monitoring system of any of claims 1 to 8, wherein:
the first set of one or more images are captured within a first, single angle with respect to the plant; and
the second set of one or more images are captured within a second, single angle with respect to the plant, the second angle being offset from the first angle by 170° to 190°.

10. The plant growth monitoring system of any of claims 1 to 9, wherein the first and second sets of one or more images each consist of a single image.

11. The plant growth monitoring system of any of claims 1 to 10, wherein the image capture system comprises:
a first camera for capturing the first set of one or more images;
a second camera for capturing the second set of one or more images; and
a carriage system adapted to move the first camera along a first side of a row of plants; and to move the second camera along a second, opposite side of a row of the plants.

12. The plant growth monitoring system of claim 11, wherein:
the carriage system is configured to move the first and second cameras synchronously and the first and second cameras are configured to capture the first and second sets of one or more images simultaneously; and/or
the plant growth monitoring system further comprises a location system configured to monitor the location of the first and second cameras to enable identification of first and second sets of images based on the monitored location of the cameras.

13. The plant growth monitoring system of any of claims 11 to 12, wherein the carriage system is adapted to:
move the first camera along a first axis, wherein the angle of the first camera with respect to the first axis is fixed; and
move the second camera along a second axis, parallel to the first axis, wherein the angle of the second camera with respect to the second axis is fixed.

14. A computer-implemented method of monitoring the growth of a plant, the computer-implemented comprising:
obtaining a first set of one or more images of a plant within a range of angles not exceeding 150°, the first set of one or more images being of a first side of the plant;
obtaining a second set of one or more images of the plant within a range of angles not exceeding 150°, the second set of one or more images being of a second side of the plant, wherein the second side of the plant is opposite to the first side of the plant, and
processing the first and second set of images to generate plant information responsive to the growth of the plant.

15. A computer program comprising computer program code means which is adapted, when said program is run on a computer, to implement the method of claim 14.
